# EUROPEAN PATENT APPLICATION

(11) **EP 4 752 056 A1**
(43) Date of publication of application: **03.06.2026**
(21) Application number: 25217506.2
(22) Date of filing: 20.11.2025
(51) Int. Cl.: B64D 11/00, B32B 27/00, B64C 1/10, B64C 1/06

(54) **PANEL ELEMENT AND AIRCRAFT INTERIOR PART**

(30) Priority: 29.11.2024 DE 102024135385
(71) Applicant: Airbus Operations GmbH, 21129 Hamburg (DE)
(72) Inventor: Ecke, Paul-Niklas, Hamburg (DE); Robrecht, Volker, Hamburg (DE); Kaletta, Peter, Hamburg (DE); Somda, Nabankele Martial, Hamburg (DE); Ouarti, El Ghali, Hamburg (DE)
(74) Representative: Airbus Germany

(57) **Abstract**

Disclosed are a panel element, in particular for use as an aircraft interior part, comprising at least one plate component having a front side and a rear side, and a stiffening structure forming enforced areas of the plate component, wherein the stiffening structure comprises at least an edge protection frame surrounding outer edges of the at least one plate component, and local stiffening elements extending over adjacent surface areas of the front side and the rear side, wherein the stiffening structure is visible in a final state of the panel element on both sides, and an aircraft interior part comprising at least one panel element.

## Description

The present invention concerns a panel element, in particular for use as an aircraft interior part, with the preamble of claim 1 and an aircraft interior part.

Aircraft interior parts such as partition walls are regularly installed in aircraft cabins in order create a pleasant atmosphere for the passengers. Commonly, they are plane-like elements which comprise a plate component which is locally enforced by a nonvisible stiffening structure. Exemplary partition walls are shown in the German patent DE 10 2009 010 861 B4 of the applicant. Exemplary side walls are also shown in the European patent application EP 4 296 156 A1 of the applicant.

It is an object of the present invention to provide an alternative panel element, in particular for aircraft interior parts.

The object is achieved by a panel element with the features of claim 1 and by an aircraft interior part with the features of claim 14. Advantageous embodiments are disclosed in the dependent claims, the description, and the figures.

According to the invention, a panel element, in particular for use as an aircraft interior part, comprises at least one plate component having a front side and a rear side and a stiffening structure. The stiffening structure forms enforced areas of the at least one plate component. The stiffening structure comprises at least an edge protection frame surrounding outer edges of the at least one plate component. In addition, the stiffening structure comprises local stiffening elements. The stiffening element extends over adjacent surface areas of the front side and the rear side. In particular, in the enforced areas the panel element is thickened on the front side and the rear side compared to the adjacent panel component areas. The stiffening structure represents main load-paths which are the results of structural optimisations. In particular, in the final state of the panel element, the stiffening structure is visible on both sides. Such panel element has several advantages. For instance, the stiffness is improved due to the stiffening elements on both sides and due to the greater thickness where the stiffening elements are located. Thus, lighter material or materials having a reduced density can be used for the panel element even if these materials have a lower performance (stiffness/weight ratio) than commonly used materials which results in a weight reduction of the panel element according to the invention. Further on, the topology and the topography of the panel element can be improved, the geometry and their cross-section can be adapted individually to the specific load requirements.

Exemplary aircraft parts which comprise at least one panel element according to the invention are partition walls, side walls, galley walls or trolleys.

In a preferred embodiment, the at least one plate component has a sandwich design comprising a core defining the front side and the rear side and at least one outer surface layer on the front side and the rear side. The sandwich design enables a light and perfect adjustment of each part of the panel element to their specific functional requirement. For instance, the surface layers can not only comprise a fibre reinforcement, but also fibre reinforcements with a varied fibre orientation, whereas the core is free of any fibre reinforcement.

Preferably, the plate component (core and surface layers) and the stiffening structure (frame and stiffening elements and junctions for the stiffening elements if necessary) are made from the same material or material composition with varying densities. By using the same material/material composition for all panel element parts, the panel element has an improved recycling compatibility. An exemplary material composition is Polyethersulfon (PESU). Thereby, the plate component can made from a PESU foam, the surface layers can be made from a glass-fibre reinforced PESU, for instance PESU GF33, and the stiffening structure can also be made from a glass-fibre reinforced PESU such as PESU GF30. However, both can comprise the same quantity of fibres.

In one embodiment, the stiffening elements overlap partially with surface layer areas of the front side and the rear side. By means of this, enlarged enforced areas are created.

In another embodiment, the stiffening elements extend at least partially through the panel. By means of this, the load transfer can be improved as the load is guided also inside the plate structure and not only along the outer front side or rear side. In order to enhance the load transfer further, the stiffening elements can run totally through the plate component.

By means of dividing a single plate component in a plurality of individual plate components which are spaced apart from each other by the stiffening elements, each plate component can be adapted optimally to the local requirements. The stiffening elements form a kind of skeleton for the individual plate components carrying them and holding them in place.

In one embodiment, in the direction of its thickness the core has varied densities over its entire extension. By means of this, the core can be optimised and adjusted to the specific load cases. In particular the density can be adjusted in such a way, that a reduced number of stiffening elements is applicable.

In one embodiment, the stiffening elements can be areas of the core which have a higher thickness than laterally adjacent core areas. Such a core can be made integrally. Further on, additional stiffening elements such as H-profiles or tapes can be placed.

According to another embodiment, the stiffening elements are core areas which have a higher density than laterally adjacent core areas. These stiffening elements can be made integrally with adjacent core areas such that a single plate component is prepared. Alternatively, these stiffening elements are prepared separately and bonded to individual plate components afterwards. In such a case, the plate component areas can be made from crushed core material, for instance.

In a further embodiment, the stiffening elements are a combination of core areas which have a higher density than laterally adjacent core areas and outer flat stiffening profiles. By means of this, the high-density plate component areas are stiffened additionally.

In a further embodiment, the stiffening elements are profiled such that a hollow space is created between at least one part of them and the at least one outer surface layers. By means of lifting up the stiffening elements partially, the moment of inertia of the panel element is enhanced, thus resulting in a weight reduction due to using less material
In another embodiment, the profiled stiffening elements are integral parts of the core of the plate component.

In order to avoid any pressure difference between the hollow spaces and their environment, a pressure compensation system can be provided. An example of a pressure compensation systems are air passages establishing a fluid connection between the hollow spaces and their environment. They can lead directly through the stiffening elements and/or through the plate component.

In other words, the invention leads to a panel element (structure) with a homogeneous material (intention to enable recyclability) targeting a weight optimized structure (intention to improve resource efficiency). The homogeneous material can be used in at least two or three different conditions simultaneously. In a later recycling and melting process, these conditions can be merged to a single, secondary raw material condition. The part combines stiffening elements (such as profiles) with classical sandwich panels. The stiffening structure (load paths, here via topology optimisation) is visible from both sides. The panel element according to the invention is preferably targeted to be out of a hybrid / integral structure with the following exemplary options:
a) H-profiles / C-profils plus Panels: An outer C-profile and inner H-profiles are defining the main load paths. The profiles are targeted as a differential design out of straight profiles and nodes. It can be also integral profiles (straight elements and nodes). Joining of several individual sandwich panels and rib structure as H-profile and C-profiles can also be an alternative.
b) Profiles and visible added stiffening elements: sandwich panel as one part with laminated sheet such as organo sheet as stiffening element or via automated tape placement.

In what follows, preferred embodiments of the present invention are explained with respect to the accompanying drawings. As it is to be understood, the various elements and components are depicted as examples only, may be facultative and/or combined in a manner different than that depicted. Reference signs for related elements are to some extent used comprehensively and not necessarily defined again for each figure, and the same holds for evident analogies between the figures.

Shown are schematically in
Fig. 1a: a partition wall made from the panel element according to the invention installed in an aircraft cabin;
Fig. 1b: a single perspective view of the partition wall;
Fig. 2a to 2c: a supporting structure of the partition wall (panel element);
Fig. 3a to 3m: cross-sections of exemplary embodiments of the panel elements according to the invention; and
Fig. 4: a trolley made from the panel element according to the invention.

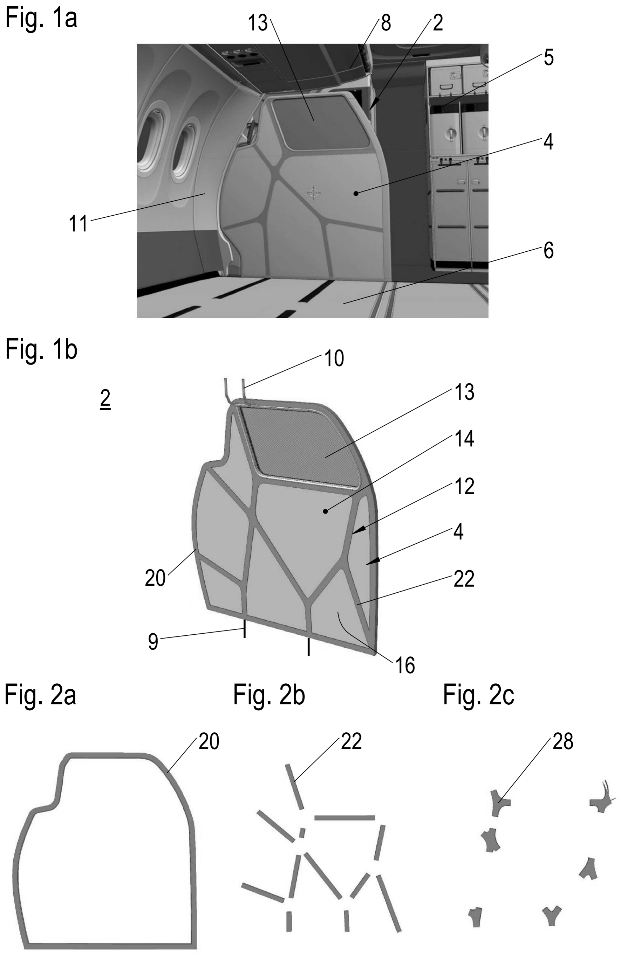

In Figure 1a, a partition wall 2 installed in an aircraft cabin of a passenger aircraft is shown. The partition wall 2 is made from a panel element 4 according to the invention and separates visually cabin sections from each other, for instance a 1^{st} class section from a 2^{nd} class section. A further application of the panel elements 4 are galley walls 5, for instance.

In vertical direction, the partition wall 2 extends from a floor area 6 to a ceiling area 8 and is connected to them via lower attachments 9 and upper attachments 10. In transversal direction, the partition wall 2 extends between a side wall area 11 and an aisle of the aircraft cabin. Here, the partition wall 2 is equipped with a window 13.

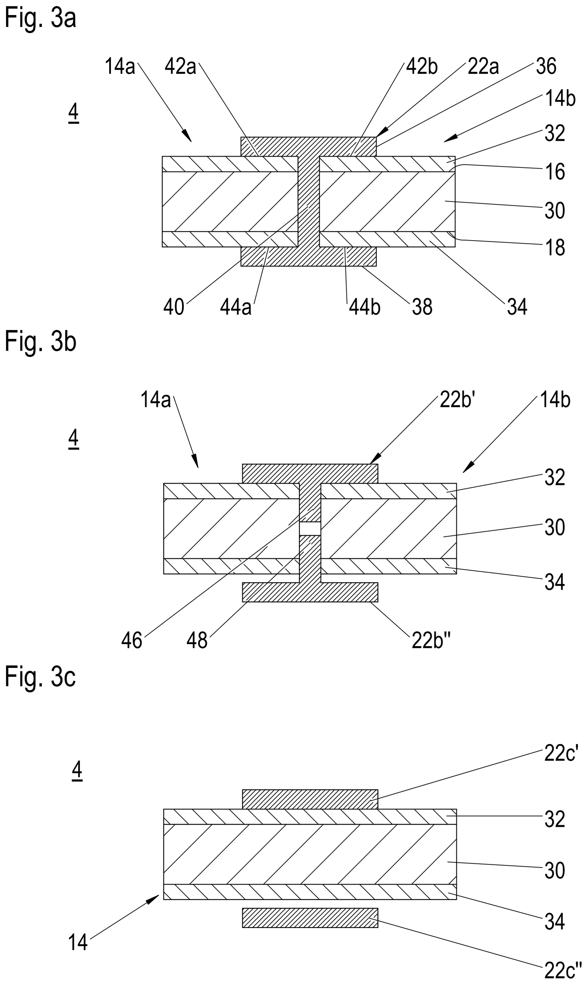

The panel element 4 according to the invention forming the partition wall 2 comprises an enforcing stiffening structure 12 and at least one plate component 14 forming outer edges, a front side 16 and an opposite rear side 18 (see Figures 3a to 3k) of the partition wall 2. In a final state of the partition wall 2, the stiffening structure 12 is visible from both sides the front side 16 and from the rear side 18.

With reference to Figures 2a, 2b and 2c, the stiffening structure 12 comprises a C-shaped edge protection frame 20 surrounding the outer edges and local stiffening elements 22 extending over adjacent surface areas 24a, 24b, 26a, 26b (see Figures 3a to 3k) of the front side 16 and the rear side 18. The stiffening elements 22 extend along main load paths. Depending on the kind of stiffening elements 22, mechanical nodes 28 as junction points between the stiffening elements 22 can be provided. Preferably, the nodes 28 are 3D-printed parts. The panel component 4 can be a single plate component 14 or have a plurality of individual shaped plate components 14a, 14b which will be described in detail in the following Figures 3a to 3k.

All embodiments of the panel element 4 in common is the at least one plate component 14 and the visible stiffening structure 12, which extends along main load paths on the front side 16 and the rear side 18 over adjacent side areas such that in the areas of the stiffening structure 12 the panel element 4 has a greater thickness than beside the stiffening structure 12. In addition, all embodiments of the panel element 4 in common is that the at least one plate component 14 has a sandwich structure which is made of the same material and material composition, respectively, as the stiffening structure 12. The difference between them is only their form, density and added fibres, for instance. A preferred material is Polyethersulfon (PESU). It should be noted that also materials other than PESU are suitable. A main feature of the chosen materials is that it is has a good recyclability.

The sandwich structure (plate component 14) itself has a core 30 defining the front side 16 and the rear side 18 and at least one outer surface layer 32, 34 covering the front side 16 and the rear side 18 (see Figure 3c for instance). Preferably, the core 30 consists of a foam made from the chosen material. Pores of the foam can be opened and/or closed. The surface layers 32, 34 consists of the same material in another density and, preferably, are comprise a specific fibre amount and fibre orientation. The fibre itself are glass-fibres, carbon fibres, aramid fibres and the like.

With reference to Figures 3a to 3k some embodiments of the panel element according to the invention are exemplary described. For the sake of clarity, only the main differences between these embodiments are described. Further on, it is mentioned that individual features of these exemplary embodiments can be combined to embodiments which are not illustrated here. All these embodiments are covered by the scope of the invention.

In Figure 3a, a plurality of individual plate components 14a, 14b are joined together by stiffening elements 22a being shaped as H-profiles. Each plate component 14a, 14b has a core 30 which is provided with a surface 32 layer on its front side 16 and with one surface layer 34 on its rear side 18. The stiffening elements 22a has a front flange 36 and a rear flange 38 which are connected to each other by a web 40 extending through the panel element 4. By means of its flanges 36, 38, the stiffening elements 22a overlap surface layer areas 42a, 42b, 44a, 44b of the front side 16 and the rear side 18. The stiffening elements 22a may have the highest density. The core 30 may have the lowest density which is constant over the entire thickness. For example, the core can be a PESU foam. The surface layers 34, 36 (skins) can be PESU GF33, on each side 16, 18 eight layers. The stiffening elements 22a can be PESU GF30 for instance.

Contrary to the single H-profile in Figure 3a, in Figure 3b a process step is shown manufacturing a H-profile-like stiffening element 22b out of two T-like shaped profiles 22b', 22b". The T-profiles 22b', 22b" are introduced from different sides between the plate components 14a, 14b and can be joined together at their free web ends 46, 48

Figure 3c shows an embodiment of a panel element 4, where the panel element 4 comprises a single plate component 14 and where stiffening elements 22c', 22c" have a tape-like shape. The tape-like stiffening elements 22c', 22c'' do not extend between adjacent plate components 14, but are provided on the front side 16 and the rear side 18 above the surface layers 32, 34. The stiffening elements 22c', 22c" are for instance unidirectional prepreg-tapes based on thermoplastic materials. An exemplary thickness of a single tape is 0,15 mm to 0,30 mm. Alternatively, the tape-like stiffening elements 22c', 22c" are made from thermoplastic based organo sheets. As a further alternative, the tape-like stiffening elements 22c', 22c'' can be made from thermoplastic based plate elements, having a thickness more than 1 mm. In order to cut the tape-shaped stiffening elements 22c', 22c" out of the organo sheets or the thermoplastic plate element, waterjet cutting can be an adequate manufacturing means.

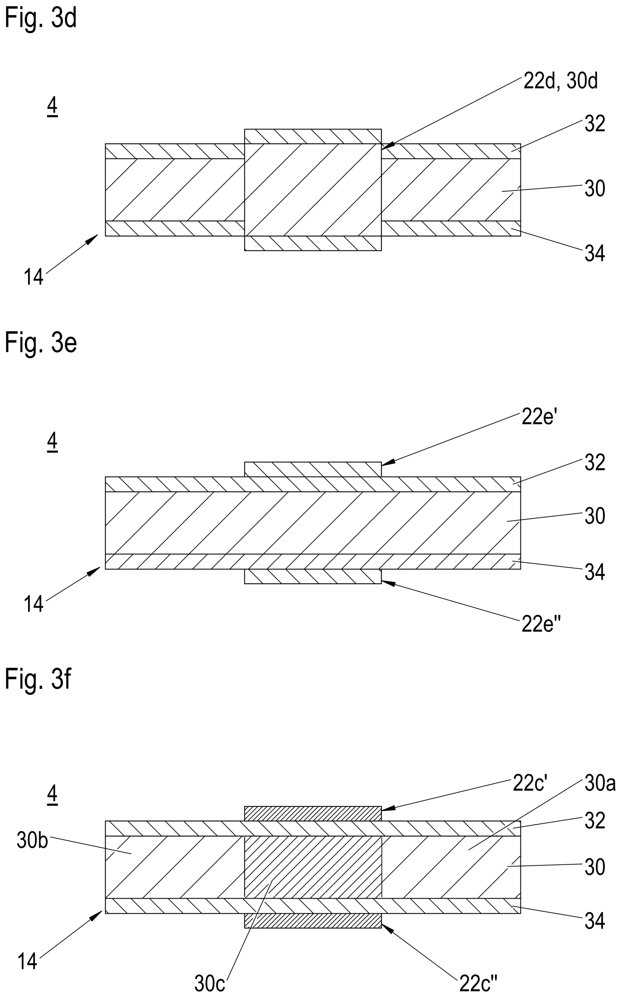

In Figure 3d an embodiment of a panel element 4 is shown, where the stiffening element 22d is made as a local thickening 30d of the core 30. The thickened stiffening element 22d can be made as an integral part of a single plate component 14 or, alternatively, made separately and then joined with adjacent plate components 14a, 14b.

Figure 3e shows an embodiment of a panel element 4, where locally additional tape-like surface layers are added to the lower and upper surface layers 32, 34 as stiffening elements 22e', 22e''. Similar to the embodiment according to Figure 3c, a single plate component 14 is provided.

Figure 3f shows a combination of the embodiment illustrated in Figure 3c with a higher core density. Here, the enforced area where the tape-like stiffening elements 22c', 22c" are provided, the core 30 has a higher density than in adjacent core areas 30a, 30b. This high-density core area 30c can be formed integrally with the adjacent core areas 30a, 30b or, alternatively, the core area 30a is made separately and then joined with the core areas 30a, 30b of adjacent plate components 14a, 14b. One way of increasing the core density is compressing the foam material. If the core has a honeycomb structure, the density can be increased by crushing.

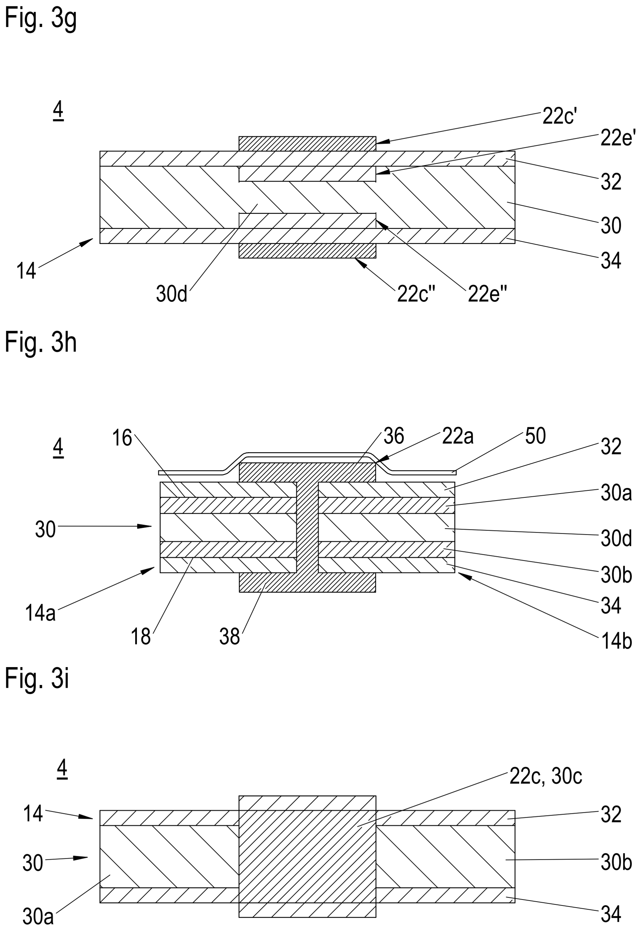

Figures 3g shows an embodiment of a panel element 4, where a single plate component 14 has a reduced core centre area 30d, which is covered on both side with at least a single tape-like surface layer 22e', 22e" (see also Figure 3e). As soon as the original core thickness is reached, the outer surface layers 32, 34 are laminated on the core 30, extending over the tape-like surface layers 22e', 22e". Then, finally stiffening element tapes 22c', 22c" (see also Figures 3c) are provided on the surface layers 32, 34 in the area of the reduced core area 30d.

In Figure 3h an embodiment of a panel element 4 is shown, where a H-shaped stiffening element 22a (Figure 3a) is combined with plate components 14, 14b, whose core density varies in the direction of its thickness. Here, each plate component 14a, 14b has a core 30 with a low-density centre area 30d and high-density areas 30a, 30b near to the front side 16 and to the rear side 18. The different areas 30a, 30b, 30d can be formed integrally or, alternatively, manufactured separately and then joined together to build the core 30 of each plate component 14a, 14b.

In addition, an outer closing layer 50 can be provided on the front side 14 and/or rear side 16 in the area of the stiffening element 22a. The outer closing layer 50 covers the flanges 36, 38 of the stiffening elements 22a and prevents them from losing unintentionally. As illustrated, the cover layer 50 does not equalise the different thicknesses of the panel element 4 in its enforced areas compared to the surface areas adjacent to the flanges 36, 38.

Figure 3i shows an embodiment of a panel element 4 similar to the embodiment shown in Figure 3d. The main difference is that according to Figure 3i, the thickened stiffening element 22i is a core area 30c which has a higher density compared with adjacent core areas 30a, 30b.

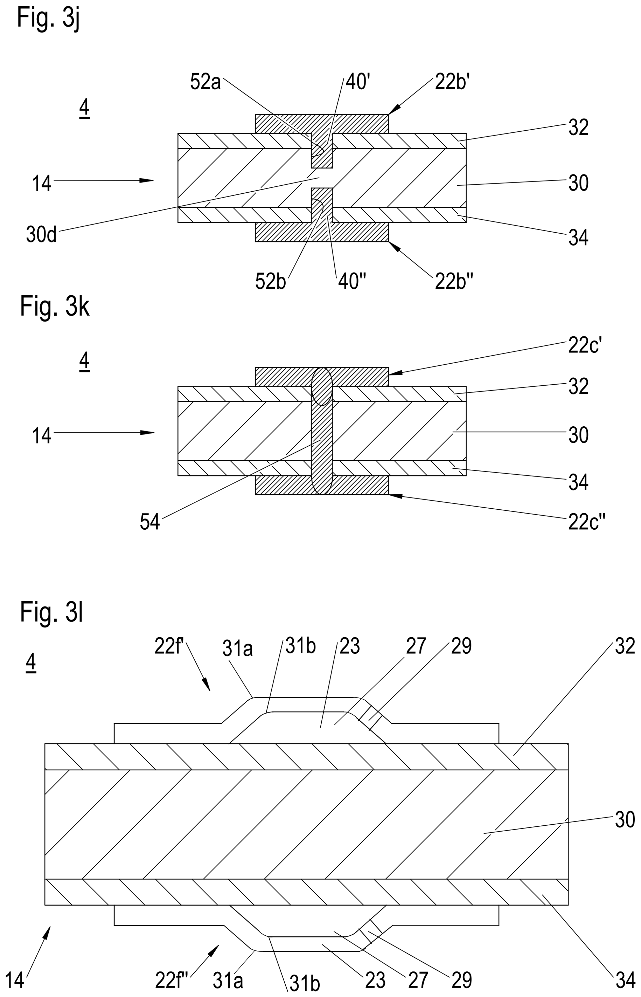

Figure 3j shows an embodiment of a panel element 4 having a single plate component 14 with reduced central core areas 30d. By means of this, perpendicular grooves 52a, 52b are formed on both sides 14, 16 of the core 30. In the grooves 52a, 52b, T-shaped stiffening elements 22b', 22b" (see Figure 3b) are introduced with their webs 40', 40". The webs 40', 40" are spaced apart from each other via the central core area 30d. The flanges 36, 38 of the stiffening elements 22b', 22b" are overlapping the surface layers 32, 34 on the front side 14 and the rear side 16 respectively.

In Figure 3k, an embodiment of a panel element 4 is shown, where tape-like stiffening elements 22c', 22c'' (see Figure 3c) on both sides 14, 16 are joined together by a plurality of connection elements 54 such as pin. For the sake of clarity, as part of the stiffening structure 12 the pins 54 consist of the same material as the other parts/components of the panel element 4.

Figure 3l shows an embodiment of a panel element 4 according to the invention, where stiffening elements 22f', 22f'' are lifted up partially from outer surface layers 32, 34 of at least one sandwichlike plate component 14 of the panel element 4. Below the lifted parts 23, here the middle part of each stiffening element 22f', 22f", a hollow space 27 is formed.

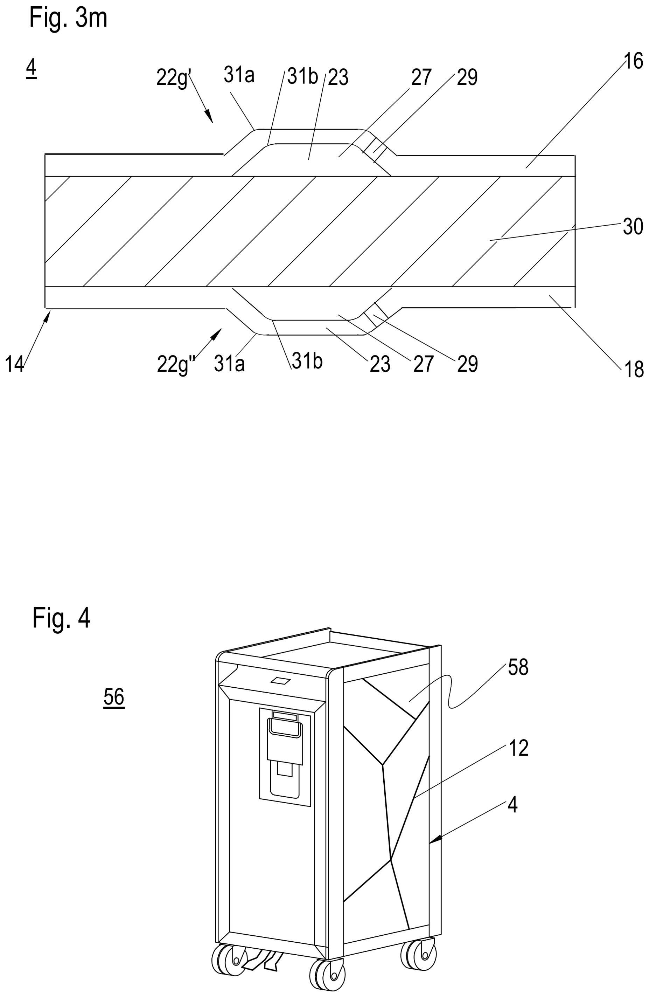

In Figure 3m, a further embodiment of the invention is shown. In this embodiment, stiffening elements 22g', 22g'' are integral parts of a core 30 of the panel element 4. The core 30 is partially profiled in the such a way that both its front side 16 and rear side 18 form hollow spaces 27. Outer surface layers as shown in the embodiment according to Figure 3l (reference numbers 32, 34) are not provided. In particular, the density of the core 30 can vary such that a firm front side 16 and rear side 18 having sufficient mechanical stability is provided.

In the embodiments shown on Figures 3l and 3m, the hollow spaces 27 have trapezoidal cross sections (Omega-profile). It should be noted that the hollow spaces 27 is not limited to such a cross-section, but further cross-sections are applicable.

Further on, in both embodiments according to Figures 3l and 3m, in order to enable a pressure compensation between the hollow spaces 27 and their environment, a pressure compensation system 29 such as air passages passing through the stiffening elements 22f', 22f'', 22g', 22g'' can be provided.

In order to reduce stress loads, in both embodiments internal and external corners / edges 31a, b of the stiffening elements 22f', 22f'', 22g', 22g" can be rounded.

As shown in Figure 4, the panel element 4 according to the invention can not only be used for aircraft interior parts such as partition walls, side walls or compartment walls such as galley walls 5 (see Figure 1a) and lavatory walls. A further application of the panel element 4 according to the invention are boxes such galley trolleys 56, for instance. Here, at least some walls 58 of the trolley 56 are made from the panel element 4.

Disclosed are a panel element, in particular for use as an aircraft interior part, comprising at least one plate component having a front side and a rear side, and a stiffening structure forming enforced areas of the plate component, wherein the stiffening structure comprises at least an edge protection frame surrounding outer edges of the at least one plate component, and local stiffening elements extending over adjacent surface areas of the front side and the rear side, wherein the stiffening structure is visible in a final state of the panel element on both sides, and an aircraft interior part comprising at least one panel element.

### Reference signs

- 2: partition wall
- 4: panel element
- 5: galley walls
- 6: floor area
- 8: ceiling area
- 9: lower attachment
- 10: upper attachment
- 11: side wall area
- 12: stiffening structure
- 13: window
- 14, 14a, 14b: plate component
- 16: front side
- 18: rear side
- 20: frame
- 22: stiffening element
- 22a: stiffening element
- 22b, 22b', 22b": stiffening element
- 22c', 22c": stiffening element
- 22d: stiffening element
- 22e', 22e": stiffening element
- 22f', 22f": stiffening element
- 22g', 22g": stiffening element
- 23: lifted part
- 24a, 24b: surface area
- 26a, 26b: surface area
- 27: hollow space
- 28: node
- 29: pressure compensation system
- 30: core
- 31a, b: corner / edge
- 30a, 30b, 30c, 30d: core area
- 32: surface layer on front side
- 34: surface layer on rear side
- 36: front flange
- 38: rear flange
- 40, 40', 40": web
- 42a, 42b: overlapping surface area
- 44a, 44b: overlapping surface area
- 46: end of the web
- 48: end of the web
- 50: closing layer
- 52a, 52b: groove
- 54: connection element
- 56: trolley
- 58: trolley wall

## Claims

1. Panel element (4), in particular for use as an aircraft interior part, comprising
• at least one plate component (14, 14a, 14b) having a front side (16) and a rear side (18); and
• a stiffening structure (12) forming enforced areas of the at least one plate component (14, 14a, 14b),
characterised that the stiffening structure (12) comprises
• at least an edge protection frame (20) surrounding outer edges of the at least one plate component (14, 14a, 14b); and
• local stiffening elements extending over adjacent surface areas of the front side (16) and the rear side (18).

2. Panel element according to claims 1, wherein the at least one plate component (14, 14a, 14b) has a sandwich design comprising
• a core (30) defining the front side (16) and the rear side (18); and
• at least one outer surface layer (32, 34) on the front side (16) and the rear side (18).

3. Panel element according to claims 1 or 2, wherein the plate component (14, 14a, 14b) and the stiffening structure (12) are made from the same material or material composition with varying densities.

4. Panel element according to any of the preceding claims, wherein in the direction of its thickness, the core (30) has varied densities over its entire extension.

5. Panel element according to any of the preceding claims, wherein the stiffening elements (22a; 22b', 22b"; 22c, 22c"; 22e, 22e'') overlap partially with surface layer areas (42a, 42b, 44a, 44b) of the front side (16) and the rear side (18).

6. Panel element according to the preceding claims, wherein the stiffening elements (22a; 22b', 22b''; 22c, 22c") extend at least partially through the at least one plate component (14, 14a, 14b).

7. Panel element according to claim 6, wherein the plate component (14) comprises a plurality of individual plate components (14a, 14b) which are spaced apart from each other by the stiffening elements (22a; 22b', 22b"; 22c, 22c").

8. Panel element according to any of claims 1 to 4, wherein the stiffening elements (22d, 22i) are core areas (30c, 30d) which have a higher thickness than laterally adjacent core areas (30a, 30b).

9. Panel element according to any of claim 8, wherein the stiffening elements (22i) are core areas (30c) which have a higher density than laterally adjacent core areas (30a, 30b).

10. Panel element according to any of claims 1 to 5, wherein the stiffening elements (22e', 22e"; 22c', 22c") are a combination of
• core areas which have a higher density than laterally adjacent core areas (30a, 30b); and
• outer flat stiffening profiles (22).

11. Panel element according to any of claims 1 to 5, wherein the stiffening elements (22f', 22f") are profiled such that a hollow space (27) is created between at least one part (23) of them and the at least one outer surface layers (32, 34).

12. Panel element according to any of claims 1 to 5, wherein the stiffening elements (22g', 22g") are profiled such that a hollow space (27) is created between at least one part (23) of them and the front side (16) and the rear side (18), respectively.

13. Panel element according to claims 11 or 12, wherein a pressure compensation system (29) is assigned to the hollow spaces (27).

14. Aircraft interior part comprising at least one panel element (4) according to any of the preceding claims.
